# EUROPEAN PATENT SPECIFICATION

(11) **EP 4 091 390 B1**
(45) Date of publication and mention of the grant of the patent: **13.12.2023**
(21) Application number: 20704263.1
(22) Date of filing: 06.02.2020
(51) Int. Cl.: H04W 72/12, H04W 84/12

(54) **COORDINATION OF CONTENTION BASED WIRELESS TRANSMISSIONS**
KOORDINATION VON KONKURRENZBASIERTEN DRAHTLOSEN ÜBERTRAGUNGEN
COORDINATION DE TRANSMISSIONS SANS FIL BASÉES SUR UN CONFLIT

(30) Priority: 13.01.2020 US 202062960460 P
(43) Date of publication of application: 23.11.2022
(73) Proprietor: Telefonaktiebolaget LM Ericsson (publ), 164 83 Stockholm (SE)
(72) Inventor: WILHELMSSON, Leif, 222 20 LUND (SE); LOPEZ, Miguel, 170 69 SOLNA (SE); MATHECKEN, Pramod Jacob, 234 35 LOMMA (SE); STAVRIDIS, Athanasios, 211 29 Malmö (SE); SUNDMAN, Dennis, 191 47 SOLLENTUNA (SE); VIEIRA, Joao, 245 63 HJÄRUP (SE)
(74) Representative: Ericsson
(86) International application number: PCT/EP2020/053030
(87) International publication number: WO 2021/144039

(56) References cited:
- LOCHAN VERMA (QUALCOMM): "Coordinated AP Time and Frequency Sharing in a Transmit Opportunity in 11be", IEEE DRAFT; 11-19-1582-00-00BE-COORDINATED-AP-TIME-AND -FREQUENCY-SHARING-IN-A-TRANSMIT-OPPORTUNI TY-IN-11BE, IEEE-SA MENTOR, PISCATAWAY, NJ USA , vol. 802.11 EHT; 802.11be 11 November 2019 (2019-11-11), pages 1-12, XP068164363, Retrieved from the Internet: URL:https://mentor.ieee.org/802.11/dcn/19/ 11-19-1582-00-00be-coordinated-ap-time-and -frequency-sharing-in-a-transmit-opportuni ty-in-11be.pptx [retrieved on 2019-11-11]
- LOCHAN VERMA (QUALCOMM): "Coordinated AP Time and Frequency Sharing Gain Analysis", IEEE DRAFT; 11-19-1879-00-00BE-COORDINATED-AP-TIME-AND -FREQUENCY-SHARING-GAIN-ANALYSIS, IEEE-SA MENTOR, PISCATAWAY, NJ USA , vol. 802.11 EHT; 802.11be 11 November 2019 (2019-11-11), pages 1-7, XP068160125, Retrieved from the Internet: URL:https://mentor.ieee.org/802.11/dcn/19/ 11-19-1879-00-00be-coordinated-ap-time-and -frequency-sharing-gain-analysis.pptx [retrieved on 2019-11-11]

## Description

### Technical Field

The present invention relates to methods for controlling wireless transmissions and to corresponding devices, systems, and computer programs.

### Background

In wireless communication technologies, there is an increased interest in using unlicensed bands, like the 2.4 GHz ISM band, the 5 GHz band, the 6 GHz band, and the 60GHz band using more advanced channel access technologies. Historically, Wi-Fi has been the dominant standard in unlicensed bands when it comes to applications requiring support for high data rates. Due to the large available bandwidth and effectively no competing technology in the unlicensed band, Wi-Fi, which is based on the IEEE 802.11 standards, has adopted a very simple distributed channel access mechanism based on the so-called distributed coordination function (DCF).

Distributed channel access means that a device, in IEEE 802.11 terminology known as a station (STA), tries to access the channel when it has something to send. Effectively there is no difference in channel access whether the station is an access point or a non-access point. DCF works well as long as the load is not too high. When the load is high, and in particular when the number of stations trying to access the channel is large, channel access based on DCF does not work well. The reason for this is that there will be a high probability of collision on the channel, leading to poor channel usage.

To improve the channel usage in Wi-Fi, and in particular allow for better support of a large number of devices, a more centralized channel access is required. That is, an approach similar to what has been used by cellular networks for the last more than 30 years. Rather than letting a station access the channel whenever it has data to send, the channel access is controlled by the AP. This approach has been introduced in IEEE 802.11ax, which e.g. support orthogonal frequency division multiple access (OFDMA) in both downlink (DL) and uplink (UL). Also multi-user transmission in form of multi-user multiple input multiple output (MU-MIMO) is supported for both the DL and the UL. By supporting MU transmission, and letting the AP control the channel access, efficient channel usage is achieved and one can avoid collisions due to contention within a cell. A cell is in IEEE 802.11 terminology referred to as basic service set (BSS).

Another useful feature in Wi-Fi is the so-called transmission opportunity (TXOP). Since contention for the channel for every single transmission causes a lot of overhead, the notion of a TXOP is introduced. A device, e.g. the AP, may once it has gained access to the channel reserve the channel for a specific time during which a number of transmissions in alternating directions can take place without the need of contending for the channel at each time. The use of TXOP does not only improve the spectrum usage, but it allows devices not associated to the AP to enter a low power mode and in this way save power. The maximum duration of a TXOP is typically in the order of 5ms.

To improve the performance even further, a next natural step is to also coordinate the channel usage between cells, i.e., perform some kind of AP coordination. A relatively straight-forward approach to this is to let a number of APs share a TXOP. Specifically, suppose there are two or more APs within range using the same channel. With no coordination, each of them would contend for the channel and the AP that wins the contention will then reserve the channel using the TXOP concept, whereas the other APs would have to defer from channel access and wait for the TXOP to end. Then a new contention begins and channel access may or may not be gained for a specific AP, implying that channel access becomes rather unpredictable and support for demanding QoS (Quality of Service) applications may be challenging.

A means to somewhat alleviate the problem described above is by means of Coordinated OFDMA (COFDMA). In COFDMA, two or more APs contend for the channel, and the winning one obtains a TXOP for, say, a 40 MHz channel. However, instead of starting data transmission to the associated stations, the AP exchanges information with the other APs and shares the available resources. As a trivial example, suppose there are two APs cooperating and both contend for a 40 MHz channel. If AP1 wins the contention, it assigns the lower 20 MHz for itself and the upper 20 MHz for AP2, whereas if AP2 wins the contention, it assigns the upper 20 MHz for itself and assigns the lower 20 MHz AP1. This shows the basic idea, although in this particular example it would have been easier to simply split the 40 MHz channel into two 20 MHz channels and just allocated the lower 20 MHz to AP1 and the upper 20 MHz to AP2. The gain by "joining forces" by means of COFDMA is that it allows for a very dynamic sharing of the available resources from one TXOP to the next and in particular that the channel access can be somewhat more predictable in that an AP will be part of an TXOP even if not all resources can be used for that AP alone.

Possibilities for improvement of the waiting time to get access to the channel are discussed in "Gain Analysis of Coordinated AP Time/Frequency Sharing in a Transmit Opportunity in 11be", by Lochan Verma et al., available under "https://mentor.ieee.org/802.11/dcn/19/11-19-1879-00-00be-coordinated-ap-time-and-frequency-sharing-gain-analysis.pptx".

"Coordinated AP Time and Frequency Sharing in a Transmit Opportunity in 11be", by Lochan Verma et al., available under https://mentor.ieee.ora/802.11/dcn/19/11-19-1582-00-00be-coordinated-ap-time-and-frequency-sharing-in-a-transmit-opportunity-in-11be.pptx" describes that a TXOP owner and participating AP exchange a TX indication message, a request message, and a schedule allocation message. The TX indication message informs the neighboring APs about the TXOP gained by the TXOP owner. The request message informs the TXOP owner about a neighboring AP's intent to participate in coordinated AP transmission. The schedule allocation message informs the participating APs about their allocated subchannels, TXOP duration, and TX start time.

The introduction of COFDMA is basically a means to introduce another level of coordination, but in its basic form the total amount of available transmission resources is not increased. There is also a problem in that the different APs might not experience the same channel conditions, so it may be so that one AP belonging to the group may not experience an idle channel, and thus sharing resources with this AP may potentially result in a waste of resources.

Accordingly, there is a need for techniques which allow for efficiently controlling contention-based wireless transmissions.

### Summary

According to an embodiment, a method of controlling wireless transmissions in a wireless communication system is provided. According to the method, an access point contends with at least one further access point for a set of transmission resources. In response to winning contention for the set of transmission resources, the access point shares at least a subset of the transmission resources with the at least one further access point. In addition, the access point exchanges information with the at least one further access point. The exchanged information comprises information on one or more wireless stations served by the at least one further access point and/or information on one or more wireless stations served by the access point. Based on the exchanged information, the access point coordinating wireless transmissions on the shared subset of transmission resources.

According to a further embodiment, a method of controlling wireless transmissions in a wireless communication system is provided. According to the method, an access point contends with one or more further access points for a set of transmission resources. In response to one of the one or more further access points winning contention for the set of transmission resources, the access point is allowed to share a subset of the transmission resources with the access point winning the contention. In addition, the access point exchanges information with the access point winning the contention. The exchanged information comprising information on one or more wireless stations served by the access point and/or information on one or more wireless stations served by the access point winning the contention. Based on the exchanged information, the access point coordinates wireless transmissions on the shared subset of transmission resources.

According to a further embodiment, an access point for a wireless communication system is provided. The access point is configured to contend with at least one further access point for a set of transmission resources. Further, the access point is configured to, in response to winning contention for the set of transmission resources, share at least a subset of the transmission resources with the at least one further access point. In addition, the access point is configured to exchange information with the at least one further access point and, based on the exchanged information, coordinate wireless transmissions on the shared subset of transmission resources. The exchanged information comprises information on one or more wireless stations served by the at least one further access point and/or information on one or more wireless stations served by the access point.

According to a further embodiment, an access point for a wireless communication system is provided. The access point comprises at least one processor and a memory. The memory contains instructions executable by said at least one processor, whereby the access point is operative to contend with at least one further access point for a set of transmission resources. Further, the memory contains instructions executable by said at least one processor, whereby the access point is operative to, in response to winning contention for the set of transmission resources, share at least a subset of the transmission resources with the at least one further access point. In addition, the memory contains instructions executable by said at least one processor, whereby the access point is operative to exchange information with the at least one further access point and, based on the exchanged information, coordinate wireless transmissions on the shared subset of transmission resources. The exchanged information comprises information on one or more wireless stations served by the at least one further access point and/or information on one or more wireless stations served by the access point.

According to a further embodiment, an access point for a wireless communication system is provided. The access point is configured to contend with one or more further access points for a set of transmission resources. Further, the access point is configured to, in response to one of the one or more further access points winning contention for the set of transmission resources, be allowed to share at least a subset of the transmission resources with the access point winning the contention. In addition, the access point is configured to exchange information with the access point winning the contention and, based on the exchanged information, coordinate wireless transmissions on the shared subset of transmission resources. The exchanged information comprising information on one or more wireless stations served by the access point and/or information on one or more wireless stations served by the access point winning the contention.

According to a further embodiment, an access point for a wireless communication system is provided. The access point comprises at least one processor and a memory. The memory contains instructions executable by said at least one processor, whereby the access point is operative to contend with one or more further access points for a set of transmission resources. Further, the memory contains instructions executable by said at least one processor, whereby the access point is operative to, in response to one of the one or more further access points winning contention for the set of transmission resources, be allowed to share at least a subset of the transmission resources with the access point winning the contention. In addition, the memory contains instructions executable by said at least one processor, whereby the access point is operative to exchange information with the access point winning the contention and, based on the exchanged information, coordinate wireless transmissions on the shared subset of transmission resources. The exchanged information comprising information on one or more wireless stations served by the access point and/or information on one or more wireless stations served by the access point winning the contention.

According to a further embodiment of the invention, a computer program or computer program product is provided, e.g., in the form of a non-transitory storage medium, which comprises program code to be executed by at least one processor of an access point of a wireless communication system. Execution of the program code causes the access point to contend with at least one further access point for a set of transmission resources. Further, execution of the program code causes the access point to, in response to winning contention for the set of transmission resources, share at least a subset of the transmission resources with the at least one further access point. In addition, execution of the program code causes the access point to exchange information with the at least one further access point and, based on the exchanged information, coordinate wireless transmissions on the shared subset of transmission resources. The exchanged information comprises information on one or more wireless stations served by the at least one further access point and/or information on one or more wireless stations served by the access point.

According to a further embodiment of the invention, a computer program or computer program product is provided, e.g., in the form of a non-transitory storage medium, which comprises program code to be executed by at least one processor of an access point of a wireless communication system. Execution of the program code causes the access point to contend with one or more further access points for a set of transmission resources. Further, execution of the program code causes the access point to, in response to one of the one or more further access points winning contention for the set of transmission resources, be allowed to share at least a subset of the transmission resources by the access point winning the contention. In addition, execution of the program code causes the access point to exchange information with the access point winning the contention and, based on the exchanged information, coordinate wireless transmissions on the shared subset of transmission resources. The exchanged information comprising information on one or more wireless stations served by the access point and/or information on one or more wireless stations served by the access point winning the contention.

Details of such embodiments and further embodiments will be apparent from the following detailed description of embodiments.

### Brief Description of the Drawings

Fig. 1 schematically illustrates a wireless communication system according to an embodiment.
Fig. 2 schematically illustrates an example of exchange of information in a wireless communication system according to an embodiment.
Fig. 3 schematically illustrates a further example of exchange of information in a wireless communication system according to an embodiment.
Fig. 4A shows a flowchart for schematically illustrating a method according to an embodiment.
Fig. 4B shows a block diagram for schematically illustrating functionalities of an access point according to an embodiment.
Fig. 5A shows a flowchart for schematically illustrating a further method according to an embodiment.
Fig. 5B shows a block diagram for schematically illustrating functionalities of an access point according to a further embodiment.
Fig. 6 schematically illustrates structures of an access point according to an embodiment.

### Detailed Description of Embodiments

In the following, concepts in accordance with exemplary embodiments of the invention will be explained in more detail and with reference to the accompanying drawings. The illustrated embodiments relate to controlling of wireless transmissions in a contention-based wireless communication system. The wireless communication system may be a WLAN (Wireless Local Area Network) system based on a IEEE 802.11 technology. However, it is noted that the illustrated concepts could also be applied to other wireless communication technologies, e.g., to contention-based modes of the LTE (Long Term Evolution) or NR (New Radio) technology specified by 3GPP (3^{rd} Generation Partnership Project).

In the illustrated concepts, additional information elements may be provided in the exchange of information between the APs participating in COFDMA operation. Further, the exchange of information is divided into static information or semi-static exchange of information and dynamic exchange of information in order to minimize the amount of overhead needed for the coordination. Further, enhancements to perform COFDMA in case of different capabilities of the APs, e.g. different bandwidths, may be provided.

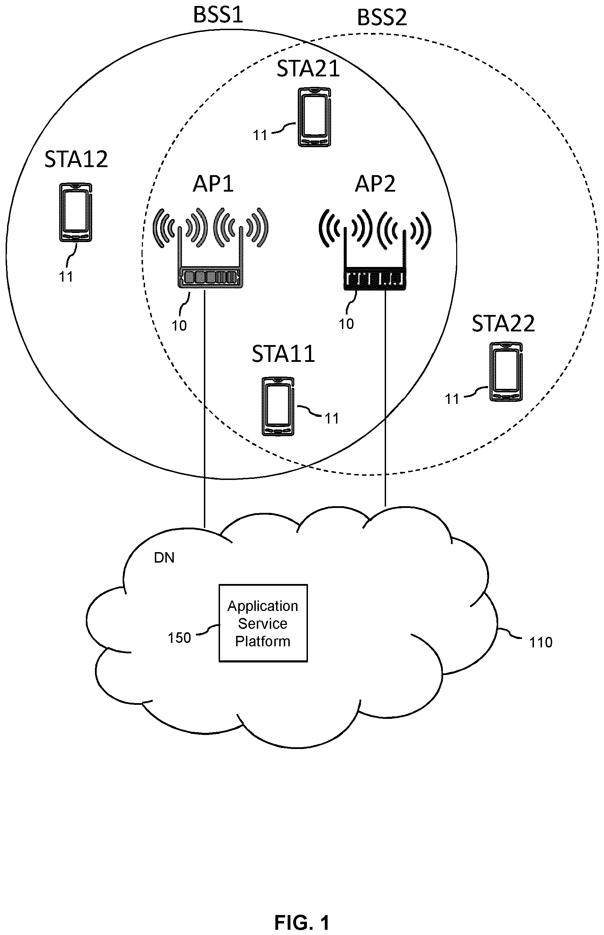

Fig. 1 illustrates an exemplary wireless communication system according to an embodiment. In the illustrated example, the wireless communication system includes multiple APs 10, in the illustrated example referred to as AP1 and AP2, and multiple stations (STAs) 11, in the illustrated example referred to as STA11, STA12, STA21, and STA22. The STAs STA11 and STA12 are served by AP1 (in a first BSS denoted as BSS1) and the STAs STA21 and STA22 are served by AP2 (in a second BSS denoted as BSS2). The stations 11 may correspond to various kinds of wireless devices, for example user terminals, such as mobile or stationary computing devices like smartphones, laptop computers, desktop computers, tablet computers, gaming devices, or the like. Further, the stations 11 could for example correspond to other kinds of equipment like smart home devices, printers, multimedia devices, data storage devices, or the like.

In the example of Fig. 1, each of the stations 11 may connect through a radio link to one of the APs 10. For example depending on location or channel conditions experienced by a given station 11, the station 11 may select an appropriate AP 10 and BSS for establishing the radio link. The radio link may be based on one or more OFDM carriers from a frequency spectrum which is shared on the basis of a contention based mechanism, e.g., an unlicensed band like the 2.4 GHz ISM band, the 5 GHz band, the 6 GHz band, or the 60 GHz band.

Each AP 10 may provide data connectivity of the stations 11 connected to the AP 10. As further illustrated, the APs 10 may be connected to a data network (DN) 110. In this way, the APs 10 may also provide data connectivity of stations 11 connected to different APs 10. Further, the APs 10 may also provide data connectivity of the stations 11 to other entities, e.g., to one or more servers, service providers, data sources, data sinks, user terminals, or the like. Accordingly, the radio link established between a given station 11 and its serving AP 10 may be used for providing various kinds of services to the station 11, e.g., a voice service, a multimedia service, or other data service. Such services may be based on applications which are executed on the station 11 and/or on a device linked to the station 11. By way of example, Fig. 1 illustrates an application service platform 150 provided in the DN 110. The application(s) executed on the station 11 and/or on one or more other devices linked to the station 11 may use the radio link for data communication with one or more other stations 11 and/or the application service platform 150, thereby enabling utilization of the corresponding service(s) at the station 11.

To achieve high performance in wireless systems with multiple overlapping cells or BSSs, e.g., in a scenario like illustrated in Fig. 1, some kind of coordination between the cells or BSSs may improve the performance. The selected approach for coordination may be based on a trade-off between performance gain and complexity. In the illustrated examples, coordination of two or more APs when operating in unlicensed bands is based on so-called Coordinated OFDMA (COFDMA). In COFDMA, the involved APs contend for and share the common resources. As an example, two or more APs, such as the APs 10 of Fig. 1, may contend for the channel in order to obtain a TXOP. Then, the winning AP can share the resources with the other contending APs in a dynamic fashion, i.e., it can share the resources differently in different TXOPs. As used herein, sharing of the resources involves that the individual resources can be used by at least two different transmitters at the same time.

Given the total amount of resources are the same, it may at a first glance look like there is nothing to gain by this procedure. However, assuming that one of the cooperating APs wins the contention (i.e., there is no other contending device which potentially can win the contention), the channel access will be much more predictable. This may potentially allow for much better support for applications requiring low latency although the average throughput is not increased. In the following various enhancements related to improving the performance of COFDMA even further will be described. In some cases, these enhancements may also allow for COFDMA to be used in more heterogeneous deployments, i.e., deployments where the involved APs have different capabilities e.g. in terms of the supported bandwidth.

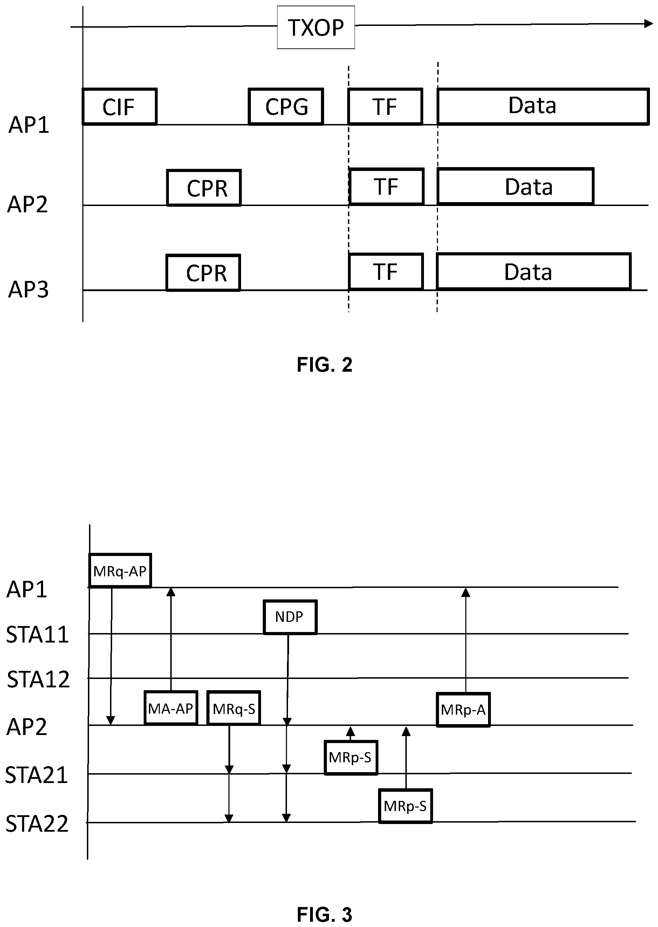

To describe different embodiments in more detail, it is assumed that the cooperation by means of COFDM follows a procedure as illustrated in Fig. 2. In the example of Fig. 2, the procedure involves three APs, denoted as AP1, AP2, and AP3, which may for example correspond to the APs 10 of Fig. 1 and an additional AP serving one or more further stations in a further BSS. In the example of Fig. 2, three packets are transmitted before the actual scheduling of data can be sent to the participating stations.

The first packet is the Coordination Invitation Frame (CIF). The CIF is sent by the AP winning the contention and by that reserving the TXOP, and it essentially is an invitation sent to the other APs that have agreed beforehand to participate in the COFDMA.

The second packet, referred to as a Coordination Participation Request (CPR), is a request sent by the APs interested in participating in this particular TXOP. The CPR is sent to the AP sending the CIF. The details for how to send the CPR from the different APs are agreed beforehand and is preferably done by using OFDMA where different parts of the band is used by different APs. Based on the CPR, the AP sending the CIF may determine how to use the resources on a global scale. The AP winning the contention will in the following also be denoted as "MasterAP", while other APs requesting to participate in the TXOP will be denoted as "Slave AP". Accordingly, the AP which is Master AP may vary from one TXOP to the next, and the number of Slave APs may also vary from zero to the total number of APs participating the COFDMA except the one being the Master AP.

The third packet, referred to as the Coordination Participation Grant (CPG), is a grant sent by the Master AP to the Slave APs with detailed information regarding resource allocation. As will be described in some details in some of the embodiments, different levels of information regarding the resource allocation is possible.

As a simple example, the following illustrates what information may be included in these three packets.
- ClF: TXOP duration, available resources for sharing
- CPR: Explicit request from the APs which want to participate in the upcoming TXOP, including amount requested resources. An AP sending a request will by definition be a Slave AP
- CPG: Response from the Master AP, allocating resources to the Slave APs.

The contents above can be seen as a basic set of information, and as will be explained below, a lot more information or other information can be exchanged to further improve the performance.

Once the three packets have been exchanged, the involved APs are ready to schedule their respective associated stations in their respective basic service set (BSS). In Fig. 2, this is illustrated by each of the APs transmitting a trigger frame (TF) followed by data. Here, it should be noted that what happens before the TF is completely unknown for the stations associated to the different APs, and from the TF and onwards all transmissions are done without any interaction between the different BSSs. Thus the whole procedure of COFDMA may be transparent to the stations associated to the different APs.

Whereas the above exemplary implementation of COFDMA allows for information exchange for each TXOP, there may also be information exchange that can be done at a much lower rate in order to minimize the amount of overhead. As compared to the above-described packet exchange this information exchange may be enhanced in various ways, and it may also be the case that this enhanced information exchange is not transparent for the stations associated to the respective AP. This information exchange that takes place at a lower rate and may be more involved or complex can be seen as an optional feature which can be used to further enhance the performance if found beneficial and needed. The enhanced information exchange is described in detail in the following embodiment.

### First Embodiment: Two-step COFDMA

According to a first embodiment the coordination may rely on information exchange at two different time scales. Here the information exchange at the slower rate may be related to positions of the different stations and how different stations interfere with one another, rather than whether an AP has data to schedule, which is done at a much faster time scale as illustrated in Fig. 2. Another difference between the two steps is that the information exchange taking place at the slower time scale would typically take considerably longer time. To exemplify what the first step in the COFDMA could look like, the scenario of Fig. 1 may be considered. In this simple example AP1 serves two stations, STA11 and STA12, whereas AP2 serves STA21 and STA22. An example of a packet exchange during this first step of the COFDMA operation is depicted in Fig. 3. In this example, it is assumed that AP1 and AP2 are aware of each other and have agreed on COFDMA. AP1 now wants to obtain and share more detailed information about how different transmissions within BSS1 impact the different transmissions in BSS2. AP1 sends a measurement request (MRq-AP) to AP2, requesting that AP2 and its associated stations perform measurement on Non Data Packets (NDPs) that will be transmitted by AP1 and its associated stations, or possibly a subset of these. The request would contain the details necessary to perform the requested measurement. In the example provided in Fig. 3, it is assumed that AP 1 has decided that it is only information related to a transmission by STA11 that is needed, and thus provides this information in the MRq-AP packet. AP2 confirms the reception of the MRq-AP packet by sending a measurement accept (MA-AP) packet. After this AP2 sends a measurement request to the associated slaves (MRq-S), essentially relaying the necessary information from AP1. The MRq-S packet may or may not be explicitly acknowledged. In the figure it is not acknowledged.

With the stations in BSS2 set up for performing measurements, STA11 is transmitting the NDP, which is used by AP2, STA21, and STA22 for performing channel measurements. Once the measurements have been performed by STA21 and STA22, the measurement reports (MRp-S) from theses slaves are transmitted to AP2, which forwards these reports together with its own measurement report (MRp-A)to AP1.

This means that both AP1 and AP2 now have knowledge about how a transmission from STA12 interferes with AP2, STA21, and STA22. In order for AP2 to obtain this knowledge it must know certain features related to the transmission done by STA12, which here is assumed to be included in the measurement request. Alternatively, AP1 can, after having obtained the measurement reports and determined how STA21 transmission causes interference, share this information with AP2.

It is here assumed that the information obtained in the above-described step will be valid and useful for a relatively long time. In case all the devices would be completely stationary, the information only needs to be updated when a new station associates with one of the APs. However, even if stations are moving around it is expected that the information can be used for a time that is relatively long compared to the duration of the measurement procedure, e.g., at least a second.

Now, with this information the second step can be performed. The second step is performed in relation to each of the TXOPs, e.g., based on a procedure as illustrated in Fig. 2.

### Second Embodiment: Allowing for effective reuse of resources

As mentioned above, a basic idea in COFDM is efficient sharing of the available resources in the sense that a specific resource is allocated to the user which by some metric is seen to need it the most. This metric can for example be that the user is the one that has been waiting the longest time to be scheduled, has the largest difference between the number of lent resources vs. the number of borrowed resources, has the largest amount of data in its buffer, has the oldest packet in its buffer, or something similar. Such an approach can improve the QoS, but it does not really improve the total amount of available resources or the total amount of data that on average can be sent. According to the second embodiment, information is exchanged between the APs involved in the COFDMA such that at least some of the available resources can be used in at least two of the BSSs.

One possibility to enable this is to share more detailed information with respect to how different transmissions interfere with one another and then use this knowledge to schedule more than one transmission on one specific resource if it is concluded that such scheduled transmissions can take place. This embodiment is not limited to exactly how such information is obtained, but the preferred way to do it according to the present invention is by using a first step used for enhanced coordination as described in the first embodiment, i.e., a step corresponding to a procedure as illustrated in Fig. 3.

Specifically, referring to the example of the first embodiment, through the use of this step AP1 has collected information about which ones of AP2, STA21, and STA22 suffer from transmission from STA11. It was here assumed that AP1 already had accurate knowledge concerning how the interference from AP1 and STA22 interfere with AP2, STA21, and STA22, so that AP1 has all knowledge that is required.

With the information available at both the APs how different transmission interfere with one another, a specific resource may be used for more than one transmission. To give a specific example, it can be assumed that AP1 wins the TXOP and moreover that AP1 wants to schedule STA11 for UL transmission. Based on knowledge for how a transmission from STA11 interferes with transmissions in BSS2, concurrent transmissions in BSS2 may be allowed. There may be various options how this reuse of resources can be implemented. To describe such options, it can be assumed that an UL transmission from STA12 will allow for a transmission between AP2 and STA22, either UL or DL. The fact that the transmission in BSS2 can be either UL or DL means that e.g. a DL transmission can be sent and also acknowledged, as the acknowledgement packet implies that an UL transmission is required.

Now assuming that AP1 wins the TXOP for a 40 MHz channel, and sends a CIF to AP2. AP2 responds with a CPR where it in addition to requesting resources also includes information about what transmission it requests to do. When AP1 receives this information, AP1 can take into account this information when deciding how to use the resources. In particular, AP1 may favor to schedule transmissions in BSS1 which allows for concurrent transmission in both BSSs using the same resources. The CPG packet may in this case not only include what resources are allocated to BSS2, but also restrictions for how these resources may be used. Effectively, AP1 can be allocated resources for AP2, but with the restriction that it may only be used for transmission to a limited set of stations associated with it. Referring to Fig. 2, AP2 may receive a grant to use a specific resource for transmission to STA22. AP1 may additionally grant radio resources but imposing restrictions on the TX power of the slave APs and/or their associated stations.

In the above examples, AP1 may have received detailed information in the request and this information was then used to determine how to restrict or otherwise control scheduling of the shared resources by AP2, which was then indicated to AP2 in the grant. As an alternative, AP1 may already in the CIF, i.e., in the invitation packet, limit the invitation to a subset of possible transmissions in BSS2. In this case, it may happen that AP2 is not able to schedule any of the allowed transmissions, with the result that AP2 will not send a request to participate in the COFDMA transmission in the coming TXOP. Of course, AP2 could also decide to actually schedule of at least some of the allowed transmissions from the subset.

### Third embodiment: Effective reuse of resources due to multi-port nodes

The second embodiment may be applied in the context of single-port nodes (e.g. single antenna nodes), for both the APs as well as stations. However, there may be further room for improvement when it comes to efficiently reuse of the resources in different BSS, if some of the involved nodes are capable of performing multiple transmissions or receptions in the same resource by using beamformed multi-antenna transmission. In the following, such nodes are also referred to as multi-port nodes. The third embodiment may thus further extend the second embodiment to cases where at least some of the involved nodes are multi-port nodes. Here, after the packet exchange of Fig. 3, the master AP may have information concerning not only to one antenna port per given node (a station or slave AP), but potentially concerning multiple antenna ports per node (if said node is capable of such configuration). As a result, the master AP has further flexibility when deciding the network's coordinated settings. The basic idea is that, some of the available ports may result in lower overall interference signatures to the network, and these would preferably be considered when optimizing the coordinated transmissions. One (out of several) antenna ports for a multi-port station or slave AP may, e.g., be associated with one of the node's physical different antenna elements, and/or different beams.

Following the example given in the first embodiment, a multi-port station belonging to AP2 (e.g. STA21) could perform multiple simultaneous measurements using the NDPs transmitted by STA11. Each measurement would be associated with a possible receiver setting, e.g., an antenna port or beam. It may be assumed or not, that the master AP has knowledge on the number of multiple simultaneously channel settings such station can use. Once the measurements have been performed, measurement reports (MRp-S) are transmitted from STA21 to AP2, where each report may have information regarding the measurements performed at the different antenna ports or beams of STA21. After AP2 forwards this information to AP1, this means that both AP1 and AP2 now have knowledge about which ports or beams from STA21 and STA22 are interfered during a transmission from STA12. After repeating this process for all combinations of NW nodes, AP1 would have a higher flexibility on how to optimize the network COFDMA settings in order to ensure concurrent transmissions at different BSSs with lower interference.

### Fourth embodiment: Effective sharing of partially overlapping resources

When all the involved APs use the same bandwidth, the sharing can be viewed as symmetrical in that all the involved APs are faced with a similar resource sharing problem when they gain access to the channel and become the owner of a TXOP. However, there may also be situations where APs with different capabilities would still benefit from COFDMA, but where at least for one AP the coordination is limited to a subset of the total bandwidth the AP would use if not being involved in the cooperation.

The fourth embodiment is also applicable when the involved APs experience different channel conditions such that when the channel is sensed, not the entire bandwidth is found idle. For example, the IEEE 802.11ax technology introduces preamble puncturing, which enables bonding of non-contiguous bandwidth parts. This may be useful when multiple idle channels are separated by a busy channel. Since EHT will support even wider bandwidths than 802.1 1ax, preamble puncturing is even more important due to the increased probability of a busy channel in the middle of idle channels. There also exist proposals to enhance the 802.11ax preamble puncturing by allowing bonding of more combinations of idle bandwidth parts than in 802.11ax. Hence, the utilization of the medium can be increased if the scheduler in the master AP takes into account preamble puncturing patterns that are required in the slave APs. For example, the CPR packets from the slave APs to the master AP may indicate the puncturing patterns that need to be applied at each slave AP. Thus, the scheduler in the master AP may minimize or eliminate the punctured bandwidth parts that are allocated to each AP.

Again referring to the exemplary scenario of Fig. 1 and assuming that AP1 wins the contention and obtains a TXOP for 40 MHz, AP2, also contending for the 40 MHz, may at the same time have sensed that only the lower 20 MHz are idle, whereas the upper 20 MHz are found busy. In the CPR packet, this is indicated by AP2, i.e., that only the lower part is suitable since the upper part is busy. This additional information has can be used such that if the two APs targets divide the resources evenly, AP1 will in this case allocated the lower part to AP2 and will allocate the upper 20 MHz for transmissions in BSS2.

In view of the above, the present disclosure also provides a method for performing scheduling in a wireless system, where two or more network nodes cooperate. These network nodes may for example correspond to the above-mentioned APs. In this method one of the two or more network nodes, after having gained access to the channel, may also schedule resources to be used by other network nodes. This scheduling may be non-trivial in the sense that the resources available to be scheduled for the two or more network nodes are not known prior to the channel access has been gained and all network nodes have announced their interest in being scheduled. In addition the same resource may be scheduled for being used by more than one of the network nodes. The interference caused by transmission in a cell (e.g., BSS) controlled by one network nodes to devices in a cell controlled by another network node may be determined by performing measurements on a time-scale that is slower than the time-scaled used for the joint scheduling.

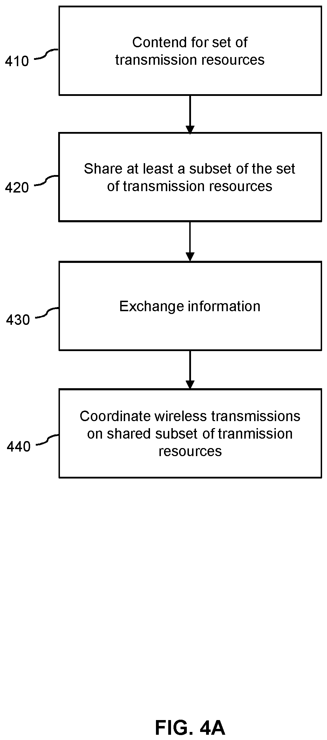

Fig. 4A shows a flowchart for illustrating a method, which may be utilized for implementing the illustrated concepts. The method of Fig. 4A may be used for implementing the illustrated concepts in a network node, in particular an access point for a wireless communication system. The wireless communication system may be based on a wireless local area network, WLAN, technology. The access point may for example correspond to any of the above-mentioned APs 10, in particular to AP1 in the examples explained in connection with of Figs 1, 2, and 3.

If a processor-based implementation of the acces point is used, at least some of the steps of the method of Fig. 4A may be performed and/or controlled by one or more processors of the access point. Such access point may also include a memory storing program code for implementing at least some of the below described functionalities or steps of the method of Fig. 4A.

At step 410, the access point contends with at least one further access point for a set of transmission resources. Such further access point may for example correspond to any of the above-mentioned APs 10, in particular to AP2 or AP3 in the examples explained in connection with of Figs 1, 2, and 3.

At step 420, in response to winning contention for the set of transmission resources, the access point shares at least a subset of the transmission resources with the at least one further access point.. For this purpose, the access point may send a corresponding indication to the at least one further access point. The above-mentioned CPG is an example of such indication. The access point may share the transmission resources in response to a request from the at least one further access point. The above-mentioned CPR is an example of such request. The sharing of the resources may involve that the shared transmission resources can be used by at least two different transmitters at the same time, e.g., by one or more wireless stations served by the access point and one or more wireless stations served by the at least one further access point. In some scenarios, at least one of these transmitters could also be the access point itself or the at least one further access point.

At step 430, the access point exchanges information with the at least one further access point.

This involves receiving information from the at least one further access point and/or sending information to the at least one further access point. In some scenarios, the indication which is optionally sent at step 420 may be used for sending at least a part of the exchanged information. Alternatively or in addition, the request which is optionally received at step 420 may be used for receiving at least a part of the exchanged information. In addition or as an alternative, one or more other messages may be used for exchanging the information. Such messages may be transmitted on a longer time-scale than the request and/or indication for allowing sharing of the transmission resources. In particular, the message(s) may be transmitted less frequently than the request and/or indication and may relate to multiple transmission opportunities, e.g., the above-mentioned TXOPs, in which sharing of the transmission resources can be individually controlled by the request and/or indication. The above-mentioned packets MRq-AP, MA-AP, and MRp-A are examples of such messages which can be used for exchanging the information between the access points.

At step 440, the access point coordinates wireless transmissions on the shared subset of transmission resources based on the exchanged information.

The exchanged information includes information on one or more wireless stations served by the at least one further access point, e.g., information on positions of the one or more wireless stations served by the at least one further access point. In addition or as an alternative, the exchanged information includes information on one or more wireless stations served by the access point, e.g., information on positions of the one or more wireless stations served by the access point.

In some scenarios, the exchanged information may include information on interference measured by the at least one further access point.

In some scenarios, the exchanged information may include information on interference measured by one or more wireless stations served by the at least one further access point.

In some scenarios, the exchanged information may include information on interference measured by the access point.

In some scenarios, the exchanged information may include information on interference measured by one or more wireless stations served by the access point.

In some scenarios, at least a part of the exchanged information may be antenna-port specific with respect to multiple antenna ports of the access point. Further, least a part of the exchanged information may be antenna-port specific with respect to multiple antenna ports of a wireless station served by the access point. In addition or as an alternative, at least a part of the exchanged information may be beam specific with respect to multiple transmission beams of the access point. Here, the multiple transmission beams may be transmission beams to or from the access point. Further, least a part of the exchanged information may be beam specific with respect to multiple transmission beams of a wireless station served by the access point. Here, the multiple transmission beams may be transmission beams to or from the wireless station served by the access point.

In some scenarios, at least a part of the exchanged information may be antenna-port specific with respect to multiple antenna ports of the at least one further access point. Further, least a part of the exchanged information may be antenna-port specific with respect to multiple antenna ports of a wireless station served by the at least one further access point. Further, least a part of the exchanged information may be beam specific with respect to multiple transmission beams of a wireless station served by the further access point. Here, the multiple transmission beams may be transmission beams to or from the wireless station served by the further access point.

In some scenarios, the access point and the at least one further access point may differ with respect to a supported bandwidth of wireless transmissions.

In some scenarios, the exchanged information may include information on a bandwidth puncturing pattern applied by the at least one further access point.

In some scenarios, the exchanged information may apply to multiple transmission opportunities on the transmission resources, e.g., the above-mentioned TXOPs. In this case, the subset of transmission resources differs for at least some of the multiple transmission opportunities.

In some scenarios, the wireless transmissions may be based on OFDMA.

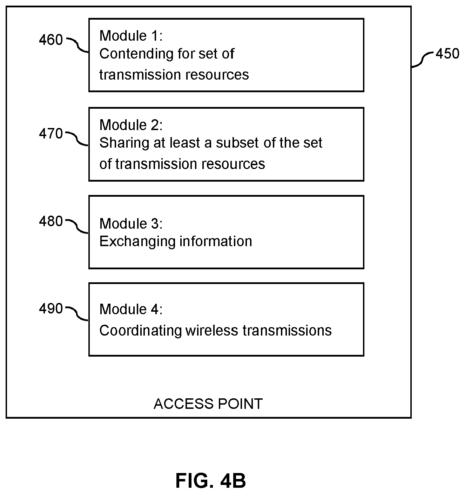

Fig. 4B shows a block diagram for illustrating functionalities of an access point 450 which operates according to the method of Fig. 4A. The access point 450 may for example correspond to one of above-mentioned APs 10. As illustrated, the access point 450 may be provided with a module 460 configured to contend with at least one further access point for a set of transmission resources, such as explained in connection with step 410. Further, the access point 450 may be provided with a module 470 configured to share at least a subset of the transmission resources with the at least one further access point, such as explained in connection with step 420. Further, the access point 450 may be provided with a module 480 configured to exchange information with the at least one further access point, such as explained in connection with step 430. Further, the access point 450 may be provided with a module 490 configured to coordinate wireless transmissions on the shared subset of transmission resources based on the exchanged information, such as explained in connection with step 440.

It is noted that the access point 450 may include further modules for implementing other functionalities, such as known functionalities of a WLAN AP. Further, it is noted that the modules of the access point 450 do not necessarily represent a hardware structure of the access point 450, but may also correspond to functional elements, e.g., implemented by hardware, software, or a combination thereof.

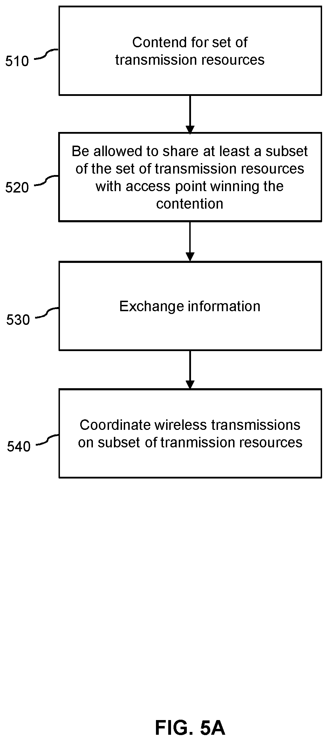

Fig. 5A shows a flowchart for illustrating a method, which may be utilized for implementing the illustrated concepts. The method of Fig. 5A may be used for implementing the illustrated concepts in a network node, in particular an access point for a wireless communication system. The wireless communication system may be based on a wireless local area network, WLAN, technology. The access point may for example correspond to any of the above-mentioned APs 10, in particular to AP2 or AP3 in the examples explained in connection with of Figs 1, 2, and 3.

If a processor-based implementation of the access point is used, at least some of the steps of the method of Fig. 5A may be performed and/or controlled by one or more processors of the access point. Such access point may also include a memory storing program code for implementing at least some of the below described functionalities or steps of the method of Fig. 5A.

At step 510, the access point contends with one or more further access points for a set of transmission resources. The further access points may for example correspond to any of the above-mentioned APs 10, in particular to AP1, AP2, or AP3 in the examples explained in connection with of Figs 1, 2, and 3.

At step 520, in response to one of the one or more further access points winning contention for the set of transmission resources, such as AP1 in the above examples, the access point is allowed to share at least a subset of the transmission resources with the access point winning the contention. For this purpose, the access point may receive a corresponding indication from the access point winning the contention. The above-mentioned CPG is an example of such indication. The access point may be allowed to share the transmission resources in response to a request to the access point winning the contention. The above-mentioned CPR is an example of such request. The sharing of the resources may involve that the shared transmission resources can be used by at least two different transmitters at the same time, e.g., by one or more wireless stations served by the access point and one or more wireless stations served by the access point winning the contention. In some scenarios, at least one of these transmitters could also be the access point itself or the access point winning the contention.

At step 530, the access point exchanges information with the access point winning the contention. This may involve receiving information from the access point winning the contention and/or sending information to the access point winning the contention. In some scenarios, the indication which is optionally received at step 520 may be used for receiving at least a part of the exchanged information. Alternatively or in addition, the request which is optionally sent at step 520 may be used for sending at least a part of the exchanged information. In addition or as an alternative, one or more other messages may be used for exchanging the information. Such messages may be transmitted on a longer time-scale than the request and/or indication for allowing sharing of the transmission resources. In particular, the message(s) may be transmitted less frequently than the request and/or indication and may relate to multiple transmission opportunities, e.g., the above-mentioned TXOPs, in which sharing of the transmission resources can be individually controlled by the request and/or indication. The above-mentioned packets MRq-AP, MA-AP, and MRp-A are examples of such messages which can be used for exchanging the information between the access points.

At step 540, based on the exchanged information, the access point coordinates wireless transmissions on the shared subset of transmission resources.

The exchanged information includes information on one or more wireless stations served by the access point, e.g., information on positions of the one or more wireless stations served by the access point. Alternatively or in addition, the exchanged information includes information on one or more wireless stations served by the access point winning the contention, e.g., information on positions of the one or more wireless stations served by the access point winning the contention.

In some scenarios, the exchanged information may include information on interference measured by the access point.

In some scenarios, the exchanged information may include information on interference measured by one or more wireless stations served by the access point.

In some scenarios, the exchanged information may include information on interference measured by the access point winning the contention.

In some scenarios, the exchanged information may include information on interference measured by one or more wireless stations served by the access point winning the contention.

In some scenarios, at least a part of the exchanged information may be antenna-port specific with respect to multiple antenna ports of the access point. Further, least a part of the exchanged information may be antenna-port specific with respect to multiple antenna ports of a wireless station served by the access point. In addition or as an alternative, at least a part of the exchanged information may be beam specific with respect to multiple transmission beams of the access point. Here, the multiple transmission beams may be transmission beams to or from the access point. Further, least a part of the exchanged information may be beam specific with respect to multiple transmission beams of a wireless station served by the access point. Here, the multiple transmission beams may be transmission beams to or from the wireless station served by the access point.

In some scenarios, at least a part of the exchanged information may be antenna-port specific with respect to multiple antenna ports of the access point winning the contention. Further, least a part of the exchanged information may be antenna-port specific with respect to multiple antenna ports of a wireless station served by the access point winning the contention. In addition or as an alternative, at least a part of the exchanged information may be beam specific with respect to multiple transmission beams of the access point winning the contention. Here, the multiple transmission beams may be transmission beams to or from the access point winning the contention. Further, least a part of the exchanged information may be beam specific with respect to multiple transmission beams of a wireless station served by the access point winning the contention. Here, the multiple transmission beams may be transmission beams to or from the wireless station served by the access point winning the contention.

In some scenarios, the access point and the access point winning the contention differ with respect to a supported bandwidth of wireless transmissions.

In some scenarios, the exchanged information may include information on a bandwidth puncturing pattern applied by the access point.

In some scenarios, the exchanged information may apply to multiple transmission opportunities on the transmission resources, e.g., the above-mentioned TXOPs. In this case, the subset of transmission resources may differ for at least some of the multiple transmission opportunities.

In some scenarios, the wireless transmissions are based on OFDMA.

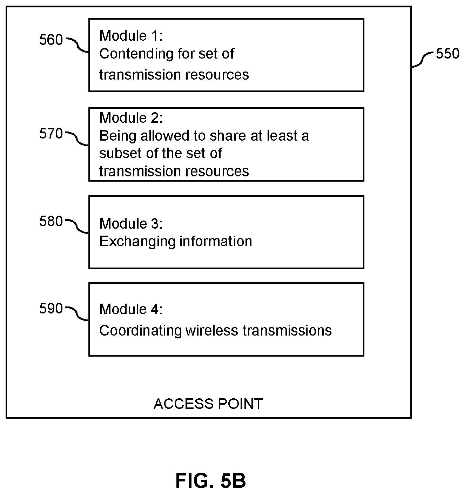

Fig. 5B shows a block diagram for illustrating functionalities of an access point 550 which operates according to the method of Fig. 5A. The access point 550 may for example correspond to one of above-mentioned APs 10. As illustrated, the access point 550 may be provided with a module 560 configured to contend with at least one further access point for a set of transmission resources, such as explained in connection with step 510. Further, the access point 550 may be provided with a module 570 configured for allowing the access point to share at least a subset of the transmission resources with the access point winning the contention, such as explained in connection with step 520. Further, the access point 550 may be provided with a module 580 configured to exchange information with the access point winning the contention, such as explained in connection with step 530. Further, the access point 550 may be provided with a module 590 configured to coordinate wireless transmissions on the shared subset of transmission resources based on the exchanged information, such as explained in connection with step 540.

It is noted that the access point 550 may include further modules for implementing other functionalities, such as known functionalities of a WLAN AP. Further, it is noted that the modules of the access point 550 do not necessarily represent a hardware structure of the access point 550, but may also correspond to functional elements, e.g., implemented by hardware, software, or a combination thereof.

It is noted that the functionalities as described in connection with Figs. 4A and 4B could also be combined with the functionalities as described in connection with Figs. 5A and 5B, e.g., in a system including a first access point which operates according to the method of Fig. 4A, and one or more further access points which operate according to the method of Fig. 5A. Further, depending on whether the access point wins the contention or not, the same access point may select between operating according to the method of Fig. 4A or according to the method of Fig. 5A.

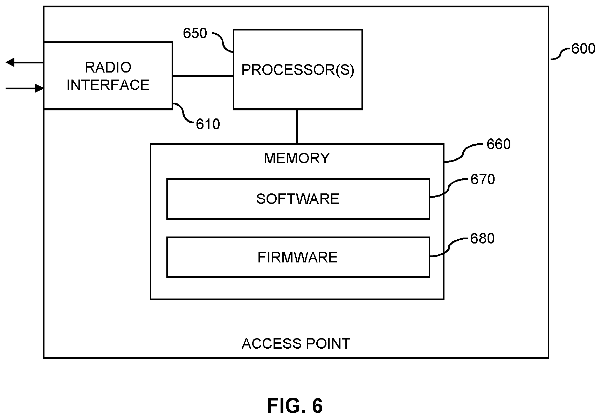

Fig. 6 illustrates a processor-based implementation of an access point 600 which may be used for implementing the above-described concepts. For example, the structures as illustrated in Fig. 6 may be used for implementing the concepts in any of the above-mentioned access points 10.

As illustrated, the access point 600 includes one or more radio interfaces 610. The radio interface(s) 610 may for example be based on a WLAN technology, e.g., according to an IEEE 802.11 family standard. However, other wireless technologies could be supported as well, e.g., the LTE technology or the NR technology. In some scenarios, the radio interface(s) 610 may be based on multiple antennas of the access point 600, and in particular support beamformed multi-antenna port transmission.

Further, the access point 600 may include one or more processors 650 coupled to the radio interface(s) 610 and a memory 660 coupled to the processor(s) 650. By way of example, the radio interface(s) 610, the processor(s) 650, and the memory 660 could be coupled by one or more internal bus systems of the access point 600. The memory 660 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 660 may include software 670 and/or firmware 680. The memory 660 may include suitably configured program code to be executed by the processor(s) 650 so as to implement the above-described functionalities for controlling wireless transmissions, such as explained in connection with Figs. 4 and 5.

It is to be understood that the structures as illustrated in Fig. 6 are merely schematic and that the access point 600 may actually include further components which, for the sake of clarity, have not been illustrated, e.g., further interfaces or further processors. Also, it is to be understood that the memory 660 may include further program code for implementing known functionalities of an access point. According to some embodiments, also a computer program may be provided for implementing functionalities of the access point 600, e.g., in the form of a physical medium storing the program code and/or other data to be stored in the memory 660 or by making the program code available for download or by streaming.

As can be seen, the concepts as described above may be used for efficiently controlling contention-based wireless transmissions, in particular with respect to coordination wireless transmissions controlled by different APs, thereby enabling efficient sharing of transmission resources.

It is to be understood that the examples and embodiments as explained above are merely illustrative and susceptible to various modifications. For example, the illustrated concepts may be applied in connection with various kinds of wireless technologies, without limitation to WLAN technologies or OFDM based technologies. Further, the concepts may be applied with respect to various types of APs and stations. Moreover, it is to be understood that the above concepts may be implemented by using correspondingly designed software to be executed by one or more processors of an existing device or apparatus, or by using dedicated device hardware.

Further, it should be noted that the illustrated apparatuses or devices may each be implemented as a single device or as a system of multiple interacting devices or modules.

## Claims

1. A method of controlling wireless transmissions in a wireless communication system, the method comprising:
an access point (10; 450; 550; 600) contending with at least one further access point (10; 450; 550; 600) for a set of transmission resources;
in response to winning contention for the set of transmission resources, the access point (10; 450; 550; 600) sharing at least a subset of the transmission resources with the at least one further access point (10; 450; 550; 600);
the access point (10; 450; 550; 600) exchanging information with the at least one further access point (10; 450; 550; 600), the exchanged information comprising information on one or more wireless stations (11) served by the at least one further access point (10; 450; 550; 600) and/or information on one or more wireless stations (11) served by the access point (10; 450; 550; 600); and
based on the exchanged information, the access point (10; 450; 550; 600) coordinating wireless transmissions on the shared subset of transmission resources.

2. The method according to claim 1,
wherein the exchanged information comprises information on positions of the one or more wireless stations (11) served by the at least one further access point (10; 450; 550; 600), information on positions of the one or more wireless stations (11) served by the access point (10; 450; 550; 600), information on interference measured by the at least one further access point (10; 450; 550; 600), information on interference measured by one or more wireless stations (11) served by the at least one further access point (10; 450; 550; 600), information on interference measured by the access point (10; 450; 550; 600), and/or information on interference measured by one or more wireless stations (11) served by the access point (10; 450; 550; 600).

3. The method according to claim 1 or 2,
wherein at least a part of the exchanged information is antenna-port specific with respect to multiple antenna ports of the access point (10; 450; 550; 600),
wherein at least a part of the exchanged information is antenna-port specific with respect to multiple antenna ports of a wireless station served by the access point (10; 450; 550; 600),
wherein at least a part of the exchanged information is antenna-port specific with respect to multiple antenna ports of the at least one further access point (10; 450; 550; 600), and/or
wherein at least a part of the exchanged information is antenna-port specific with respect to multiple antenna ports of a wireless station served by the at least one further access point (10; 450; 550; 600).

4. The method according to any one of claims 1 to 3,
wherein at least a part of the exchanged information is beam specific with respect to multiple transmission beams of the access point (10; 450; 550; 600),
wherein at least a part of the exchanged information is beam specific with respect to multiple transmission beams of a wireless station served by the access point (10; 450; 550; 600),
wherein at least a part of the exchanged information is beam specific with respect to multiple transmission beams of the at least one further access point (10; 450; 550; 600), and/or
wherein at least a part of the exchanged information is beam specific with respect to multiple transmission beams of a wireless station served by the at least one further access point (10; 450; 550; 600).

5. The method according to any one of claims 1 to 4,
wherein the access point (10; 450; 550; 600) and the at least one further access point (10; 450; 550; 600) differ with respect to a supported bandwidth of wireless transmissions, and/or
wherein the exchanged information comprises information on a bandwidth puncturing pattern applied by the at least one further access point (10; 450; 550; 600).

6. The method according to any one of claims 1 to 5,
wherein the exchanged information applies to multiple transmission opportunities on the transmission resources, and
wherein the subset of transmission resources differs for at least some of the multiple transmission opportunities.

7. A method of controlling wireless transmissions in a wireless communication system, the method comprising:
an access point (10; 450; 550; 600) contending with one or more further access points (10; 450; 550; 600) for a set of transmission resources;
in response to one of the one or more further access points (10; 450; 550; 600) winning contention for the set of transmission resources, the access point (10; 450; 550; 600) being allowed to share at least a subset of the transmission resources with the access point (10; 450; 550; 600) winning the contention;
the access point (10; 450; 550; 600) exchanging information with the access point (10; 450; 550; 600) winning the contention, the exchanged information comprising information on one or more wireless stations (11) served by the access point (10; 450; 550; 600) and/or information on one or more wireless stations (11) served by the access point (10; 450; 550; 600) winning the contention;
based on the exchanged information, the access point (10; 450; 550; 600) coordinating wireless transmissions on the shared subset of transmission resources.

8. The method according to claim 7,
wherein the exchanged information comprises information on positions of the one or more wireless stations (11) served by the access point (10; 450; 550; 600), information on positions of the one or more wireless stations (11) served by the access point (10; 450; 550; 600) winning the contention, information on interference measured by the access point (10; 450; 550; 600), information on interference measured by one or more wireless stations (11) served by the access point (10; 450; 550; 600), information on interference measured by the access point (10; 450; 550; 600) winning the contention, and/or information on interference measured by one or more wireless stations (11) served by the access point (10; 450; 550; 600) winning the contention.

9. The method according to claim 7 or 8,
wherein at least a part of the exchanged information is antenna-port specific with respect to multiple antenna ports of the access point (10; 450; 550; 600),
wherein at least a part of the exchanged information is antenna-port specific with respect to multiple antenna ports of a wireless station served by the access point (10; 450; 550; 600),
wherein at least a part of the exchanged information is antenna-port specific with respect to multiple antenna ports of the access point (10; 450; 550; 600) winning the contention, and/or
wherein at least a part of the exchanged information is antenna-port specific with respect to multiple antenna ports of a wireless device served by the access point (10; 450; 550; 600) winning the contention.

10. The method according to any one of claims 7 to 9,
wherein at least a part of the exchanged information is beam specific with respect to multiple transmission beams of the access point (10; 450; 550; 600),
wherein at least a part of the exchanged information is beam specific with respect to multiple transmission beams of a wireless station served by the access point (10; 450; 550; 600),
wherein at least a part of the exchanged information is beam specific with respect to multiple transmission beams of the access point (10; 450; 550; 600) winning the contention, and/or
wherein at least a part of the exchanged information is beam specific with respect to multiple transmission beams of a wireless device served by the access point (10; 450; 550; 600) winning the contention.

11. The method according to any one of claims 7 to 10,
wherein the access point (10; 450; 550; 600) and the access point (10; 450; 550; 600) winning the contention differ with respect to a supported bandwidth of wireless transmissions, and/or
wherein the exchanged information comprises information on a bandwidth puncturing pattern applied by the access point (10; 450; 550; 600).

12. The method according to any one of claims 7 to 11,
wherein the exchanged information applies to multiple transmission opportunities on the transmission resources, and
wherein the subset of transmission resources differs for at least some of the multiple transmission opportunities.

13. An access point (10; 450; 550; 600) for a wireless communication system, the access point (10; 450; 550; 600) being configured to:
- contend with at least one further access point (10; 450; 550; 600) for a set of transmission resources;
- in response to winning contention for the set of transmission resources, share at least a subset of the transmission resources with the at least one further access point (10; 450; 550; 600);
- exchange information with the at least one further access point (10; 450; 550; 600), the exchanged information comprising information on one or more wireless stations (11) served by the at least one further access point (10; 450; 550; 600) and/or information on one or more wireless stations (11) served by the access point (10; 450; 550; 600); and
- based on the exchanged information, coordinate wireless transmissions on the shared subset of transmission resources.

14. The access point (10; 450; 550; 600) according to claim 13,
wherein the access point is configured to perform a method according to any one of claims 2 to 6.

15. An access point (10; 450; 550; 600) for a wireless communication system, the access point (10; 450; 550; 600) being configured to:
- contend with one or more further access points (10; 450; 550; 600) for a set of transmission resources;
- in response to one of the one or more further access points (10; 450; 550; 600) winning contention for the set of transmission resources, be allowed to share at least a subset of the transmission resources with the access point (10; 450; 550; 600) winning the contention;
- exchange information with the access point (10; 450; 550; 600) winning the contention, the exchanged information comprising information on one or more wireless stations (11) served by the access point (10; 450; 550; 600) and/or information on one or more wireless stations (11) served by the access point (10; 450; 550; 600) winning the contention;
- based on the exchanged information, coordinate wireless transmissions on the shared subset of transmission resources.

16. The access point (10; 450; 550; 600) according to claim 15,
wherein the access point (10; 450; 550; 600) is configured to perform a method according to any one of claims 8 to 12.

17. A computer program or computer program product comprising program code to be executed by at least one processor (650) of an access point (10; 450; 550; 600), whereby execution of the program code causes the access point (10; 450; 550; 600) to perform a method according to any one of claims 1 to 12.

## Patentansprüche

1. Verfahren zur Steuerung von Drahtlosübertragungen in einem Drahtloskommunikationssystem, wobei das Verfahren umfasst, dass:
ein Zugangspunkt (10; 450; 550; 600) mit mindestens einem weiteren Zugangspunkt (10; 450; 550; 600) um einen Satz von Übertragungsressourcen konkurriert;
der Zugangspunkt (10; 450; 550; 600) in Reaktion auf das Gewinnen des Wettstreits um den Satz von Übertragungsressourcen zumindest eine Teilmenge der Übertragungsressourcen mit dem mindestens einen weiteren Zugangspunkt (10; 450; 550; 600) gemeinsam nutzt;
der Zugangspunkt (10; 450; 550; 600) Informationen mit dem mindestens einen weiteren Zugangspunkt (10; 450; 550; 600) austauscht, wobei die ausgetauschten Informationen Informationen über eine oder mehrere Drahtlosstationen (11), die von dem mindestens einem weiteren Zugangspunkt (10; 450; 550; 600) bedient werden, und/oder Informationen über eine oder mehrere Drahtlosstationen (11) umfassen, die vom Zugangspunkt (10; 450; 550; 600) bedient werden; und
der Zugangspunkt (10; 450; 550; 600) Drahtlosübertragungen auf der gemeinsam genutzten Teilmenge von Übertragungsressourcen basierend auf den ausgetauschten Informationen koordiniert.

2. Verfahren nach Anspruch 1,
wobei die ausgetauschten Informationen Informationen über Positionen der einen oder der mehreren Drahtlosstationen (11), die von dem mindestens einen weiteren Zugangspunkt (10; 450; 550; 600) bedient werden, Informationen über Positionen der einen oder der mehreren Drahtlosstationen (11), die vom Zugangspunkt (10; 450; 550; 600) bedient werden, Informationen über Interferenz, die von dem mindestens einen weiteren Zugangspunkt (10; 450; 550; 600) gemessen wird, Informationen über Interferenz, die von einer oder mehreren Drahtlosstationen (11) gemessen wird, die von dem weiteren Zugangspunkt (10; 450; 550; 600) bedient werden, Informationen über Interferenz, die vom Zugangspunkt (10; 450; 550; 600) gemessen wird, und/oder Informationen über Interferenz umfassen, die von einer oder mehreren Drahtlosstationen (11) gemessen wird, die vom Zugangspunkt (10; 450; 550; 600) bedient werden.

3. Verfahren nach Anspruch 1 oder 2,
wobei zumindest ein Teil der ausgetauschten Informationen antennenanschlussspezifisch in Bezug auf mehrere Antennenanschlüsse des Zugangspunkts (10; 450; 550; 600) ist,
wobei zumindest ein Teil der ausgetauschten Informationen antennenanschlussspezifisch in Bezug auf mehrere Antennenanschlüsse einer Drahtlosstation ist, die vom Zugangspunkt (10; 450; 550; 600) bedient wird,
wobei zumindest ein Teil der ausgetauschten Informationen antennenanschlussspezifisch in Bezug auf mehrere Antennenanschlüsse des mindestens einen weiteren Zugangspunkts (10; 450; 550; 600) ist, und/oder
wobei zumindest ein Teil der ausgetauschten Informationen antennenanschlussspezifisch in Bezug auf mehrere Antennenanschlüsse einer Drahtlosstation ist, die von dem mindestens einen weiteren Zugangspunkt (10; 450; 550; 600) bedient wird.

4. Verfahren nach einem der Ansprüche 1 bis 3,
wobei zumindest ein Teil der ausgetauschten Informationen strahlspezifisch in Bezug auf mehrere Übertragungsstrahlen des Zugangspunkts (10; 450; 550; 600) ist,
wobei zumindest ein Teil der ausgetauschten Informationen strahlspezifisch in Bezug auf mehrere Übertragungsstrahlen einer Drahtlosstation ist, die vom Zugangspunkts (10; 450; 550; 600) bedient wird,
wobei zumindest ein Teil der ausgetauschten Informationen strahlspezifisch in Bezug auf mehrere Übertragungsstrahlen des mindestens einen weiteren Zugangspunkts (10; 450; 550; 600) ist,
wobei zumindest ein Teil der ausgetauschten Informationen strahlspezifisch in Bezug auf mehrere Übertragungsstrahlen einer Drahtlosstation ist, die von dem mindestens einen weiteren Zugangspunkt (10; 450; 550; 600) bedient wird.

5. Verfahren nach einem der Ansprüche 1 bis 4,
wobei der Zugangspunkt (10; 450; 550; 600) und der mindestens eine weitere Zugangspunkt (10; 450; 550; 600) sich in Bezug auf die unterstützte Bandbreite von Drahtlosübertragungen unterscheiden und/oder wobei die ausgetauschten Informationen Informationen über ein Bandbreitenpunktierungsmuster umfassen, das von dem mindestens einen weiteren Zugangspunkt (10; 450; 550; 600) angewendet wird.

6. Verfahren nach einem der Ansprüche 1 bis 5,
wobei die ausgetauschten Informationen für mehrere Übertragungsgelegenheiten auf den Übertragungsressourcen gelten,
wobei die Teilmenge von Übertragungsressourcen sich zumindest für einige der mehreren Übertragungsgelegenheiten unterscheidet.

7. Verfahren zur Steuerung von Drahtlosübertragungen in einem Drahtloskommunikationssystem, wobei das Verfahren umfasst, dass:
ein Zugangspunkt (10; 450; 550; 600) mit einem oder mehreren weiteren Zugangspunkten (10; 450; 550; 600) um einen Satz von Übertragungsressourcen konkurriert;
der Zugangspunkt (10; 450; 550; 600) in Reaktion darauf, dass einer des einen oder der mehreren weiteren Zugangspunkte (10; 450; 550; 600) den Wettstreit um den Satz von Übertragungsressourcen gewinnt, zumindest eine Teilmenge der Übertragungsressourcen mit dem Zugangspunkt (10; 450; 550; 600), der den Wettstreit gewinnt, gemeinsam nutzen darf;
der Zugangspunkt (10; 450; 550; 600) Informationen mit dem Zugangspunkt (10; 450; 550; 600) austauscht, der den Wettstreit gewinnt, wobei die ausgetauschten Informationen Informationen über eine oder mehrere Drahtlosstationen (11), die vom Zugangspunkt (10; 450; 550; 600) bedient werden, und/oder Informationen über eine oder mehrere Drahtlosstationen (11) umfassen, die von dem Zugangspunkt (10; 450; 550; 600) bedient werden, der den Wettstreit gewinnt; und
der Zugangspunkt (10; 450; 550; 600) Drahtlosübertragungen auf der gemeinsam genutzten Teilmenge von Übertragungsressourcen basierend auf den ausgetauschten Informationen koordiniert.

8. Verfahren nach Anspruch 7,
wobei die ausgetauschten Informationen Informationen über Positionen der einen oder der mehreren Drahtlosstationen (11), die vom Zugangspunkt (10; 450; 550; 600) bedient werden, Informationen über Positionen der einen oder der mehreren Drahtlosstationen (11), die von dem Zugangspunkt (10; 450; 550; 600) bedient werden, der den Wettstreit gewinnt, Informationen über Interferenz, die vom Zugangspunkt (10; 450; 550; 600) gemessen wird, Informationen über Interferenz, die von einer oder mehreren Drahtlosstationen (11) gemessen wird, die vom Zugangspunkt (10; 450; 550; 600) bedient werden, Informationen über Interferenz, die von dem Zugangspunkt (10; 450; 550; 600) gemessen wird, der den Wettstreit gewinnt, und/oder Informationen über Interferenz umfassen, die von einer oder mehreren Drahtlosstationen (11) gemessen wird, die von dem Zugangspunkt (10; 450; 550; 600) bedient werden, der den Wettstreit gewinnt.

9. Verfahren nach Anspruch 7 oder 8,
wobei zumindest ein Teil der ausgetauschten Informationen antennenanschlussspezifisch in Bezug auf mehrere Antennenanschlüsse des Zugangspunkts (10; 450; 550; 600) ist,
wobei zumindest ein Teil der ausgetauschten Informationen antennenanschlussspezifisch in Bezug auf mehrere Antennenanschlüsse einer Drahtlosstation ist, die vom Zugangspunkt (10; 450; 550; 600) bedient wird,
wobei zumindest ein Teil der ausgetauschten Informationen antennenanschlussspezifisch in Bezug auf mehrere Antennenanschlüsse des Zugangspunkts (10; 450; 550; 600) ist, der den Wettstreit gewinnt, und/oder
wobei zumindest ein Teil der ausgetauschten Informationen antennenanschlussspezifisch in Bezug auf mehrere Antennenanschlüsse einer Drahtlosstation ist, die von dem Zugangspunkt (10; 450; 550; 600) bedient wird, der den Wettstreit gewinnt.

10. Verfahren nach einem der Ansprüche 7 bis 9,
wobei zumindest ein Teil der ausgetauschten Informationen strahlspezifisch in Bezug auf mehrere Übertragungsstrahlen des Zugangspunkts (10; 450; 550; 600) ist,
wobei zumindest ein Teil der ausgetauschten Informationen strahlspezifisch in Bezug auf mehrere Übertragungsstrahlen einer Drahtlosstation ist, die vom Zugangspunkt (10; 450; 550; 600) bedient wird,
wobei zumindest ein Teil der ausgetauschten Informationen strahlspezifisch in Bezug auf mehrere Übertragungsstrahlen des Zugangspunkts (10; 450; 550; 600) ist, der den Wettstreit gewinnt, und/oder
wobei zumindest ein Teil der ausgetauschten Informationen strahlspezifisch in Bezug auf mehrere Übertragungsstrahlen einer Drahtlosstation ist, die von dem Zugangspunkt (10; 450; 550; 600) bedient wird, der den Wettstreit gewinnt.

11. Verfahren nach einem der Ansprüche 7 bis 10,
wobei der Zugangspunkt (10; 450; 550; 600) und der Zugangspunkt (10; 450; 550; 600), der den Wettstreit gewinnt, sich in Bezug auf die unterstützte Bandbreite von Drahtlosübertragungen unterscheiden und/oder
wobei die ausgetauschten Informationen Informationen über ein Bandbreitenpunktierungsmuster umfassen, das vom Zugangspunkt (10; 450; 550; 600) angewendet wird.

12. Verfahren nach einem der Ansprüche 7 bis 11,
wobei die ausgetauschten Informationen für mehrere Übertragungsgelegenheiten auf den Übertragungsressourcen gelten,
wobei die Teilmenge von Übertragungsressourcen sich zumindest für einige der mehreren Übertragungsgelegenheiten unterscheidet.

13. Zugangspunkt (10; 450; 550; 600) für ein Drahtloskommunikationssystem, wobei der Zugangspunkt (10; 450; 550; 600) konfiguriert ist zum:
- Konkurrieren mit mindestens einem weiteren Zugangspunkt (10; 450; 550; 600) um einen Satz von Übertragungsressourcen;
- gemeinsamen Nutzen zumindest einer Teilmenge der Übertragungsressourcen mit dem mindestens einen weiteren Zugangspunkt (10; 450; 550; 600) in Reaktion auf das Gewinnen des Wettstreits um den Satz von Übertragungsressourcen;
- Austauschen von Informationen mit dem mindestens einen weiteren Zugangspunkt (10; 450; 550; 600), wobei die ausgetauschten Informationen Informationen über eine oder mehrere Drahtlosstationen (11), die von dem mindestens einem weiteren Zugangspunkt (10; 450; 550; 600) bedient werden, und/oder Informationen über eine oder mehrere Drahtlosstationen (11) umfassen, die vom Zugangspunkt (10; 450; 550; 600) bedient werden; und
- Koordinieren von Drahtlosübertragungen auf der gemeinsam genutzten Teilmenge von Übertragungsressourcen basierend auf den ausgetauschten Informationen.

14. Zugangspunkt (10; 450; 550; 600) nach Anspruch 13,
wobei der Zugangspunkt (10; 450; 550; 600) zum Durchführen eines Verfahrens nach einem der Ansprüche 2 bis 6 konfiguriert ist.

15. Zugangspunkt (10; 450; 550; 600) für ein Drahtloskommunikationssystem, wobei der Zugangspunkt (10; 450; 550; 600) konfiguriert ist zum:
- Konkurrieren mit mindestens einem oder mehreren weiteren Zugangspunkt (10; 450; 550; 600) um einen Satz von Übertragungsressourcen;
- Erlaubnis erhalten in Reaktion darauf, dass einer des einen oder der mehreren weiteren Zugangspunkte (10; 450; 550; 600) den Wettstreit um den Satz von Übertragungsressourcen gewinnt, zum gemeinsamen Nutzen zumindest einer Teilmenge der Übertragungsressourcen mit dem Zugangspunkt (10; 450; 550; 600), der den Wettstreit gewinnt;
- Austauschen von Informationen mit dem Zugangspunkt (10; 450; 550; 600), der den Wettstreit gewinnt, wobei die ausgetauschten Informationen Informationen über eine oder mehrere Drahtlosstationen (11), die vom Zugangspunkt (10; 450; 550; 600) bedient werden, und/oder Informationen über eine oder mehrere Drahtlosstationen (11) umfassen, die von dem Zugangspunkt (10; 450; 550; 600) bedient werden, der den Wettstreit gewinnt;
- Koordinieren von Drahtlosübertragungen auf der gemeinsam genutzten Teilmenge von Übertragungsressourcen basierend auf den ausgetauschten Informationen.

16. Zugangspunkt (10; 450; 550; 600) nach Anspruch 15,
wobei der Zugangspunkt (10; 450; 550; 600) zum Durchführen eines Verfahrens nach einem der Ansprüche 8 bis 12 konfiguriert ist.

17. Computerprogramm oder Computerprogrammprodukt, umfassend Programmcode, der von mindestens einem Prozessor (650) eines Zugangspunkts (10; 450; 550; 600) ausgeführt werden soll, wobei die Ausführung des Programmcodes den Zugangspunkt (10; 450; 550; 600) zum Durchführen eines Verfahrens nach einem der Ansprüche 1 bis 12 veranlasst.

## Revendications

1. Procédé de commande de transmissions sans fil dans un système de communication sans fil, le procédé comprenant :
un point d'accès (10 ; 450 ; 550 ; 600) étant en compétition avec au moins un autre point d'accès (10 ; 450 ; 550 ; 600) pour un ensemble de ressources de transmission ;
en réponse au fait de gagner la compétition pour l'ensemble de ressources de transmission, le point d'accès (10 ; 450 ; 550 ; 600) partageant au moins un sous-ensemble des ressources de transmission avec l'au moins un autre point d'accès (10 ; 450 ; 550 ; 600) ;
le point d'accès (10 ; 450 ; 550 ; 600) échangeant des informations avec l'au moins un autre point d'accès (10 ; 450 ; 550 ; 600), les informations échangées comprenant des informations sur une ou plusieurs stations sans fil (11) desservies par l'au moins un autre point d'accès (10 ; 450 ; 550 ; 600) et/ou des informations sur une ou plusieurs stations sans fil (11) desservies par le point d'accès (10 ; 450 ; 550 ; 600) ; et
sur la base des informations échangées, le point d'accès (10 ; 450 ; 550 ; 600) coordonnant des transmissions sans fil sur le sous-ensemble partagé de ressources de transmission.

2. Procédé selon la revendication 1,
dans lequel les informations échangées comprennent des informations sur des positions des une ou plusieurs stations sans fil (11) desservies par l'au moins un autre point d'accès (10 ; 450 ; 550 ; 600), des informations sur des positions des une ou plusieurs stations sans fil (11) desservies par le point d'accès (10 ; 450 ; 550 ; 600), des informations sur des interférences mesurées par l'au moins un autre point d'accès (10 ; 450 ; 550 ; 600), des informations sur des interférences mesurées par une ou plusieurs stations sans fil (11) desservies par l'au moins un autre point d'accès (10 ; 450 ; 550 ; 600), des informations sur des interférences mesurées par le point d'accès (10 ; 450 ; 550 ; 600), et/ou des informations sur des interférences mesurées par une ou plusieurs stations sans fil (11) desservies par le point d'accès (10 ; 450 ; 550 ; 600).

3. Procédé selon la revendication 1 ou 2,
dans lequel au moins une partie des informations échangées est spécifique à un port d'antenne en ce qui concerne de multiples ports d'antenne du point d'accès (10 ; 450 ; 550 ; 600),
dans lequel au moins une partie des informations échangées est spécifique à un port d'antenne en ce qui concerne de multiples ports d'antenne d'une station sans fil desservie par le point d'accès (10 ; 450 ; 550 ; 600),
dans lequel au moins une partie des informations échangées est spécifique à un port d'antenne en ce qui concerne de multiples ports d'antenne de l'au moins un autre point d'accès (10 ; 450 ; 550 ; 600), et/ou
dans lequel au moins une partie des informations échangées est spécifique à un port d'antenne en ce qui concerne de multiples ports d'antenne d'une station sans fil desservie par l'au moins un autre point d'accès (10 ; 450 ; 550 ; 600).

4. Procédé selon l'une quelconque des revendications 1 à 3,
dans lequel au moins une partie des informations échangées est spécifique à un faisceau en ce qui concerne de multiples faisceaux de transmission du point d'accès (10 ; 450 ; 550 ; 600),
dans lequel au moins une partie des informations échangées est spécifique à un faisceau en ce qui concerne de multiples faisceaux de transmission d'une station sans fil desservie par le point d'accès (10 ; 450 ; 550 ; 600),
dans lequel au moins une partie des informations échangées est spécifique à un faisceau en ce qui concerne de multiples faisceaux de transmission de l'au moins un autre point d'accès (10 ; 450 ; 550 ; 600), et/ou
dans lequel au moins une partie des informations échangées est spécifique à un faisceau en ce qui concerne de multiples faisceaux de transmission d'une station sans fil desservie par l'au moins un autre point d'accès (10 ; 450 ; 550 ; 600).

5. Procédé selon l'une quelconque des revendications 1 à 4,
dans lequel le point d'accès (10 ; 450 ; 550 ; 600) et l'au moins un autre point d'accès (10 ; 450 ; 550 ; 600) diffèrent en ce qui concerne une bande passante prise en charge de transmissions sans fil, et/ou
dans lequel les informations échangées comprennent des informations sur un motif de perforation de bande passante appliqué par l'au moins un autre point d'accès (10 ; 450 ; 550 ; 600).

6. Procédé selon l'une quelconque des revendications 1 à 5,
dans lequel les informations échangées s'appliquent à de multiples opportunités de transmission sur les ressources de transmission, et
dans lequel le sous-ensemble de ressources de transmission diffère pour au moins certaines des multiples opportunités de transmission.

7. Procédé de commande de transmissions sans fil dans un système de communication sans fil, le procédé comprenant :
un point d'accès (10 ; 450 ; 550 ; 600) étant en compétition avec un ou plusieurs autres points d'accès (10 ; 450 ; 550 ; 600) pour un ensemble de ressources de transmission ;
en réponse au fait que l'un des un ou plusieurs autres points d'accès (10 ; 450 ; 550 ; 600) gagne la compétition pour l'ensemble de ressources de transmission, le point d'accès (10 ; 450 ; 550 ; 600) étant autorisé à partager au moins un sous-ensemble des ressources de transmission avec le point d'accès (10 ; 450 ; 550 ; 600) gagnant la compétition ;
le point d'accès (10 ; 450 ; 550 ; 600) échangeant des informations avec le point d'accès (10 ; 450 ; 550 ; 600) gagnant la compétition, les informations échangées comprenant des informations sur une ou plusieurs stations sans fil (11) desservies par le point d'accès (10 ; 450 ; 550 ; 600) et/ou des informations sur une ou plusieurs stations sans fil (11) desservies par le point d'accès (10 ; 450 ; 550 ; 600) gagnant la compétition ;
sur la base des informations échangées, le point d'accès (10 ; 450 ; 550 ; 600) coordonnant des transmissions sans fil sur le sous-ensemble partagé de ressources de transmission.

8. Procédé selon la revendication 7,
dans lequel les informations échangées comprennent des informations sur des positions des une ou plusieurs stations sans fil (11) desservies par le point d'accès (10 ; 450 ; 550 ; 600), des informations sur des positions des une ou plusieurs stations sans fil (11) desservies par le point d'accès (10 ; 450 ; 550 ; 600) gagnant la compétition, des informations sur des interférences mesurées par le point d'accès (10 ; 450 ; 550 ; 600), des informations sur des interférences mesurées par une ou plusieurs stations sans fil (11) desservies par le point d'accès (10 ; 450 ; 550 ; 600), des informations sur des interférences mesurées par le point d'accès (10 ; 450 ; 550 ; 600) gagnant la compétition, et/ou des informations sur des interférences mesurées par une ou plusieurs stations sans fil (11) desservies par le point d'accès (10 ; 450 ; 550 ; 600) gagnant la compétition.

9. Procédé selon la revendication 7 ou 8,
dans lequel au moins une partie des informations échangées est spécifique à un port d'antenne en ce qui concerne de multiples ports d'antenne du point d'accès (10 ; 450 ; 550 ; 600),
dans lequel au moins une partie des informations échangées est spécifique à un port d'antenne en ce qui concerne de multiples ports d'antenne d'une station sans fil desservie par le point d'accès (10 ; 450 ; 550 ; 600),
dans lequel au moins une partie des informations échangées est spécifique à un port d'antenne en ce qui concerne de multiples ports d'antenne du point d'accès (10 ; 450 ; 550 ; 600) gagnant la compétition, et/ou
dans lequel au moins une partie des informations échangées est spécifique à un port d'antenne en ce qui concerne de multiples ports d'antenne d'une station sans fil desservie par le point d'accès (10 ; 450 ; 550 ; 600) gagnant la compétition.

10. Procédé selon l'une quelconque des revendications 7 à 9,
dans lequel au moins une partie des informations échangées est spécifique à un faisceau en ce qui concerne de multiples faisceaux de transmission du point d'accès (10 ; 450 ; 550 ; 600),
dans lequel au moins une partie des informations échangées est spécifique à un faisceau en ce qui concerne de multiples faisceaux de transmission d'une station sans fil desservie par le point d'accès (10 ; 450 ; 550 ; 600),
dans lequel au moins une partie des informations échangées est spécifique à un faisceau en ce qui concerne de multiples faisceaux de transmission du point d'accès (10 ; 450 ; 550 ; 600) gagnant la compétition, et/ou
dans lequel au moins une partie des informations échangées est spécifique à un faisceau en ce qui concerne de multiples faisceaux de transmission d'une station sans fil desservie par le point d'accès (10 ; 450 ; 550 ; 600) gagnant la compétition.

11. Procédé selon l'une quelconque des revendications 7 à 10,
dans lequel le point d'accès (10 ; 450 ; 550 ; 600) et le point d'accès (10 ; 450 ; 550 ; 600) gagnant la compétition diffèrent en ce qui concerne une bande passante prise en charge de transmissions sans fil, et/ou
dans lequel les informations échangées comprennent des informations sur un motif de perforation de bande passante appliqué par le point d'accès (10 ; 450 ; 550 ; 600) .

12. Procédé selon l'une quelconque des revendications 7 à 11,
dans lequel les informations échangées s'appliquent à de multiples opportunités de transmission sur les ressources de transmission, et
dans lequel le sous-ensemble de ressources de transmission diffère pour au moins certaines des multiples opportunités de transmission.

13. Point d'accès (10 ; 450 ; 550 ; 600) pour un système de communication sans fil, le point d'accès (10 ; 450 ; 550 ; 600) étant configuré pour :
- être en compétition avec au moins un autre point d'accès (10 ; 450 ; 550 ; 600) pour un ensemble de ressources de transmission ;
- en réponse au fait de gagner la compétition pour l'ensemble de ressources de transmission, partager au moins un sous-ensemble des ressources de transmission avec l'au moins un autre point d'accès (10 ; 450 ; 550 ; 600) ;
- échanger des informations avec l'au moins un autre point d'accès (10 ; 450 ; 550 ; 600), les informations échangées comprenant des informations sur une ou plusieurs stations sans fil (11) desservies par l'au moins un autre point d'accès (10 ; 450 ; 550 ; 600) et/ou des informations sur une ou plusieurs stations sans fil (11) desservies par le point d'accès (10 ; 450 ; 550 ; 600) ; et
- sur la base des informations échangées, coordonner des transmissions sans fil sur le sous-ensemble partagé de ressources de transmission.

14. Point d'accès (10 ; 450 ; 550 ; 600) selon la revendication 13,
dans lequel le point d'accès est configuré pour réaliser un procédé selon l'une quelconque des revendications 2 à 6.

15. Point d'accès (10 ; 450 ; 550 ; 600) pour un système de communication sans fil, le point d'accès (10 ; 450 ; 550 ; 600) étant configuré pour :
- être en compétition avec un ou plusieurs autres points d'accès (10 ; 450 ; 550 ; 600) pour un ensemble de ressources de transmission ;
- en réponse au fait que l'un des un ou plusieurs autres points d'accès (10 ; 450 ; 550 ; 600) gagne la compétition pour l'ensemble de ressources de transmission, être autorisé à partager au moins un sous-ensemble des ressources de transmission avec le point d'accès (10 ; 450 ; 550 ; 600) gagnant la compétition ;
- échanger des informations avec le point d'accès (10 ; 450 ; 550 ; 600) gagnant la compétition, les informations échangées comprenant des informations sur une ou plusieurs stations sans fil (11) desservies par le point d'accès (10 ; 450 ; 550 ; 600) et/ou des informations sur une ou plusieurs stations sans fil (11) desservies par le point d'accès (10 ; 450 ; 550 ; 600) gagnant la compétition ;
- sur la base des informations échangées, coordonner des transmissions sans fil sur le sous-ensemble partagé de ressources de transmission.

16. Point d'accès (10 ; 450 ; 550 ; 600) selon la revendication 15,
dans lequel le point d'accès (10 ; 450 ; 550 ; 600) est configuré pour réaliser un procédé selon l'une quelconque des revendications 8 à 12.

17. Programme informatique ou produit programme informatique comprenant un code de programme à exécuter par au moins un processeur (650) d'un point d'accès (10 ; 450 ; 550 ; 600), de telle manière qu'une exécution du code de programme amène le point d'accès (10 ; 450 ; 550 ; 600) à réaliser un procédé selon l'une quelconque des revendications 1 à 12.
